# EUROPEAN PATENT SPECIFICATION

(11) **EP 2 369 408 B1**
(45) Date of publication and mention of the grant of the patent: **06.03.2013**
(21) Application number: 11425063.2
(22) Date of filing: 14.03.2011
(51) Int. Cl.: G03B 3/00, G03B 13/00, G03B 17/02

(54) **Image acquisition unit**
Bildaufnahmevorrichtung
Unité d'acquisition d'images

(30) Priority: 19.03.2010 IT FI20100043
(43) Date of publication of application: 28.09.2011
(73) Proprietor: SELEX GALILEO S.P.A., 50013 Campi Bisenzio (FI) (IT)
(72) Inventor: Bardazzi, Riccardo, 59100 Prato (IT); Falciani, Piero, 50018 Scandicci (FI) (IT)
(74) Representative: Mannucci, Michele

(56) References cited:
- WO-A1-95/07489
- GB-A- 2 395 391
- US-A- 5 786 849
- US-A1- 2001 033 415
- US-A1- 2005 062 870

## Description

### Technical field

The present invention relates to a device or unit for the acquisition of images in the visible and/or infrared spectrum. In particular the present invention relates to a unit of portable type, which can be gripped with two hands for night and/or day observation and telemetry.

### Background art

Many applications, such as surveillance, patrolling and the like, use night and/or day vision units with one or more vision systems, for example in the infrared or visible spectrum, optionally combined with laser telemetry systems or with other functions. Vision systems in the visible spectrum can have a wide field of view or a narrow field of view, according to applications, and more than one vision system in the visible radiation range can be provided on the same unit.

These units are of considerable weight due to the high number of internal components, including batteries to power the electronic parts. The optical part of at least one of the vision systems on these units requires focusing. This is normally obtained by acting on an external ring nut that supports an objective lens of the respective vision channel (infrared or visible). In addition to focusing, there are also controls to act on the various components of the device. These controls are normally produced through buttons that can be operated with the fingers with which the user holds the unit. Focusing normally requires the user to release at least one hand, so that during focusing the unit is held with one hand only. This makes the maneuver difficult due to the weight and dimensions of the vision unit and does not allow simultaneous focusing and operation of other controls for which buttons are provided in the gripping area.

Conventional units are disclosed in GB 2 395 391 A, US 2005/0062870 A1, US 5 786 849 A and US 2001/0033415 A1.

### Summary of the invention

According to one aspect, the aim of the invention is to produce a unit of the type described above with improved efficiency, which can be gripped more firmly during focusing operations and also allows simultaneous action on controls other than those for focusing.

Substantially, the invention provides an image acquisition unit comprising: a housing with a handgrip to be gripped and supported by hand; inside said housing, at least one image detection system; at least one focusing device for said image detection system, that can be operated from the outside of said housing as defined in independent claim 1. The image detection system comprises an objective lens, fixed with respect to the housing, and a support, movable with respect to the objective lens, mounted on which is a sensor for detecting images focused by said objective lens. The focusing device advantageously comprises a ring that can be adjusted from the outside of the housing placed in a position to allow adjustment with the thumb of the hand with which said unit is gripped. Moreover, a mechanical connection member is provided between the ring and the moving support, said connection member transforming the rotational movement of the ring into a translational and focusing movement of said support with respect to said fixed objective lens.

In practice the handgrip is double and designed for gripping the unit with two hands. For better gripping, the double handgrip has preferably two depressed portions or depressed notches placed on one side of the housing opposite the side where the focusing ring is arranged. In this manner the image acquisition unit can be gripped with both hands placing the four fingers from the index to the little finger of each hand in correspondence of the depressed portion, while at least one of the thumbs is located at the focusing ring. If the unit includes two vision systems, for example in the visible range and in the infrared range, there will be provided preferably two focusing rings, opposing the double handgrip. If the double handgrip has two depressed portions, the two rings will be arranged on the housing in areas substantially opposed with respect to the depressed portions.

The double handgrip can have, e.g. in the depressed portions formed on the surface of the housing, buttons for controlling the members inside the acquisition unit.

In advantageous embodiments of the invention, an elastic member is associated with said support to eliminate backlash. The elastic member can comprise a helical compression spring surrounding a chamber extending between the objective lens and the sensor of the vision system, said spring pushing the support to a position of maximum distance from the objective lens and towards the inside of the housing.

In some embodiments the objective lens of the vision system forms a closing window and a sealing member is associated with the ring.

The unit can comprise two or more vision systems, i.e. image acquisition systems, in different wavelength ranges, for example in the visible spectrum and in the infrared spectrum. In preferred embodiments of the invention, at least two distinct vision systems each comprise a dedicated focusing system, with an objective lens which is fixed with respect to the housing and with a support for an image acquisition sensor, movable for focusing. Both vision channels have similar devices for moving the sensor support, provided with two rings for focusing. The rings are advantageously positioned on the housing in such a manner that each one can be operated with the thumb of one hand, so that the user can grip the unit firmly with both hands and focus one or other of the two vision systems indifferently, while also being able to operate other buttons or control members with which the unit is equipped.

Further advantageous features and embodiments of the invention are set forth in the dependent claims, the contents of which form an integral part of the present description.

### Brief description of the drawings

The invention will be better understood following the description and accompanying drawing, which shows a non-limiting embodiment of the invention. More in particular, in the drawing:
Figs. 1 and 2 show axonometric views of the unit according to the invention in a top view and in a bottom view;
Fig. 3 shows a longitudinal section according to an inclined plane of the unit according to the invention; and
Fig. 4 shows a partial view of the internal components of the unit according to the invention.

### Detailed description of embodiments of the invention

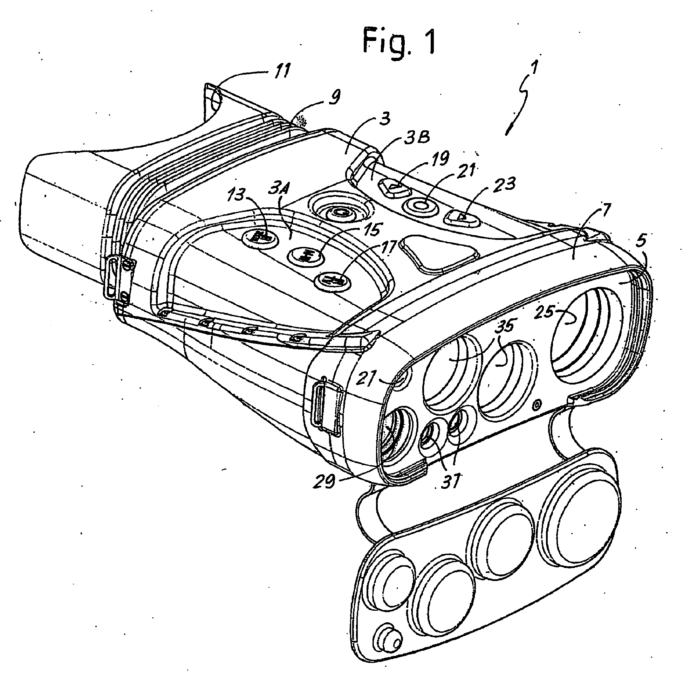

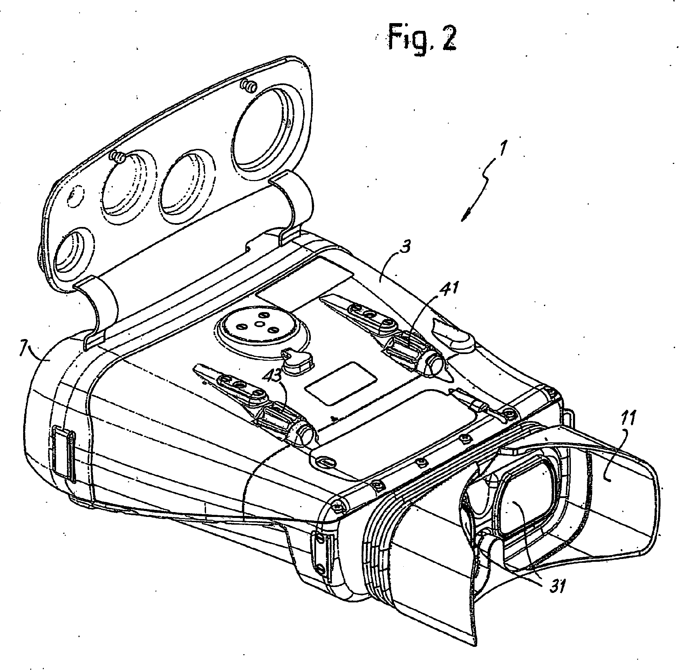

Figs. 1 and 2 show two axonometric views according to two different angles of a unit according to the invention, indicated as a whole with 1.

The unit 1 comprises a housing 3 formed by a suitably shaped shell. The housing 3 frontally has a front closing wall 5 with a rubber frame 7 that surrounds a series of optical components described below. On the opposite side the unit 1 comprises a bellows 9 and a light shield 11 that allow the user, by placing the unit against the face, to observe the scene captured by the unit 1 without the face being illuminated by the micro-displays; in military use, if the face were to be illuminated the observer could become an easy target for the enemy. For this purpose a magnetic sensor switches off the display when the observer moves the device away from the face. The bellows also has the purpose of preventing interference with ambient light.

In some embodiments the housing 3 has a shell that laterally forms two depressed portions 3A and 3B, defining a handgrip for the user to hold the unit with. The depressed portions 3A and 3B forming the handgrip contains buttons 13, 15, 17, 19, 21, 23 that can be used to perform various operations or to send various commands to the internal components of the unit 1 which do not form the specific subject matter of the present invention and therefore shall not be described in particular detail herein.

A first objective lens 25 for an observation channel in the infrared spectrum, a second objective lens 27 for an observation channel in the visible spectrum with wide field of view and a third objective lens 29 for the acquisition of images in the visible spectrum with a narrow field of view are arranged on the front part defined by the front wall 5. A sensor or electronic detector is associated with each lens 25, 27, 29, to capture the image focused by the objective lens and transfer it to a pair of monitors positioned inside the unit 1 so that they can be observed through eyepieces 31 (Fig. 2) that are protected by the light shield 11. In some embodiments and in a known manner the user is able to select one or other of the three vision channels indicated above, so that one or other of three different possible images of the same external scene, captured through one or other of the three objective lenses 25, 27, 29 and relative detectors or sensors, is viewed on the micro-displays positioned in front of the eyepieces 31.

The unit 1 can be completed by a laser telemetry system having optical windows 35 for passage of the laser beam of the telemeter. Finally, in the example of embodiment shown, the front wall 5 of the unit also includes connectors 37 for various possible functions which are not of interest for this description.

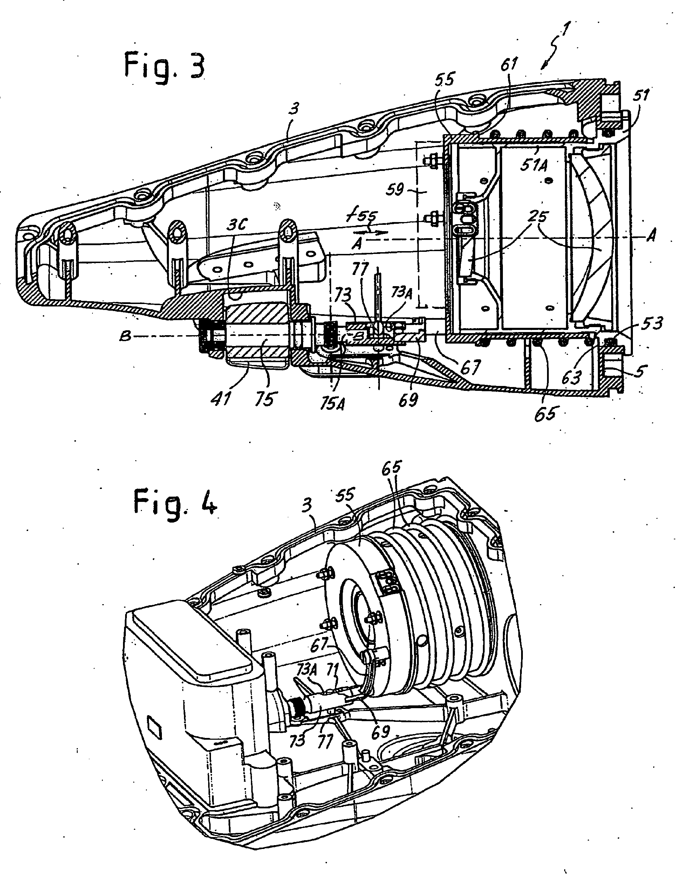

Arranged on the lower part (when the unit is gripped by the user), on the housing 3 are two rings 41, 43 for focusing the image in the visible spectrum and in the infrared spectrum, with a mechanism that will be described hereunder with reference to Figs. 3 and 4 for only one of the two aforesaid channels, it being understood that a substantially equivalent device can be used for the other channel. In practice, as shown in the drawing, the two depressed portions 3A, 3B defining the handgrip of the unit are arranged sideways on the upper part of the housing 3, while the rings 41, 43 are arranged on the opposed lower part of the housing. The definition "upper" and "lower" are referred to the position taken during use, the user being standing.

As can be observed by examining Figs. 1 and 2, the rings 41 and 43 are arranged so that by gripping the unit 1 with both hands and in substance surrounding the housing 3 laterally with the palms of the hands placing the fingers from the index finger to the little finger in the depressed portions 3A, 3B, the thumbs are positioned in the vicinity of the rings 41 and 43. In this manner, by gripping the unit 1 firmly with both hands the user can access all the functions of the device through the buttons 13 - 23 and is simultaneously able to focus one or other of the vision channels used through one or other of the rings 41 and 43. The user can therefore focus the image captured by the vision channel selected without requiring to remove the hand from the housing 3 and therefore without requiring to support the unit 1 with only one hand and is also able to act simultaneously on the buttons 13 - 23 and on the focusing ring 41 or 43.

Figs. 3 and 4 show a constructional detail of an embodiment of the mechanical focusing system referred to the vision channel in the infrared spectrum. As mentioned above, a similar device can be provided for at least one of the channels in the visible spectrum. In particular, Fig. 3 shows a section according to a plane oriented approximately according to the longitudinal extension of the unit 1 and inclined to intersect the optical axis A-A of the objective lens 25 and the axis of the corresponding focusing ring 41.

With particular reference to Fig. 3, it is observed that the objective lens 25 (in the example shown comprising two lenses) is housed in a sleeve 51 fastened on the front wall 5 of the unit 1, with a sealing gasket 53 interposed between the sleeve 51 and the housing opening in the wall 5. The absence of movement between the objective lens 25 and the front wall 5 of the viewing unit 1 allows the inside and outside of the housing 3 to be effectively isolated from one another with simple and reliable means.

The sleeve 51 extends toward the inside of the housing 3 with a substantially cylindrical portion 51 A that extends inside a moving support 55 of substantially cylindrical shape. The support 55 and the cylindrical portion 51A of the sleeve 51 form a telescopic system, the support 55 being movable according to the double arrow f55 with respect to the objective lens 25 and to the sleeve 51 to allow focusing of the image focused by the objective lens 25 on an infrared detector or sensor. This latter is mounted on the back area of the support 55, i.e. on the area facing the inside of the housing 3 and is indicated schematically with 59. The support 55 and the wall 51A form a sort of chamber extending between the infrared sensor and the objective lens.

The support 55 has an annular ridge 61. A helical compression spring 65 is arranged between said annular ridge 61 and a flange 63 of the sleeve 51 in which the objective lens 25 is mounted. The spring urges the support 55 towards the inside of the housing 3, i.e. away from the objective lens 25.

As can be seen in particular in Fig. 4, where the infrared sensor or detector 59 has been removed for greater clarity of the drawing, constrained on the back part of the support 55 is a bracket 67, integral with a plate or sheet 69. This latter is inserted in a notch 71 provided in an internally threaded bushing 73. The threaded bushing 73 is engaged by screwing on a threaded portion 75A of a pin 75 onto which the ring 41 is fitted.

A pin 77 rigidly constrained to the housing 3 is inserted in a slot 73A of the threaded bushing 73 to prevent the latter from rotating about its axis when the ring 41 is rotated, also allowing a movement of the bushing 73 in the direction of the axis B-B of the pin 75.

The pin 75 is supported in a seat 3C of the housing 3, which also partially houses the ring 41, which projects downward from the seat 3C to be accessible to the user and allow the rotation movement. Rotation of the ring 41 causes rotation of the pin 75 to which the ring is torsionally constrained. A gasket acts on the pin to isolate the inside of the housing 3 with respect to the outside environment. Said gasket is of very small diameter, equivalent to the diameter of the pin 75 and therefore allows an efficient seal to be obtained at low cost, more efficient than gaskets normally used to make a seal around the moving objective lenses of conventional units.

As a result of the screw coupling between the portion 75 of the pin and the bushing 73, rotation of the pin 75 in turn causes a translational movement of the bushing. When the bushing 73 moves forward, i.e. toward the front part 5 of the housing 3, it causes compression of the spring 65 as a result of the mechanical connection between the bushing 73 and the support 55 obtained through the plate 69 and the bracket 67. When the pin rotates in the opposite direction, moving the bushing 73 toward the user, the thrust of the spring 65 maintains the plate 69 engaged in the notch 71 of the bushing 73 and therefore the support 55 moves back together with the bushing.

With the arrangement described above it is therefore possible to adjust the distance between the sensor or detector 59 and the objective lens 25, and thus perform focusing of the image captured by the objective lens 25 on the focal plane of the detector or sensor 59, acting on the ring 51 without requiring to detach the hands from the housing 3 and from the handgrip formed by the depressed portions 3A or 3B. This allows focusing one or two channels (depending whether one or two rings are provided) reducing the risk of altering the orientation of the device and therefore the observation line of the electro-optical viewing channels.

Focusing takes place by adjusting the position of the detector or sensor 49 leaving the objective lens 25 fixed with respect to the housing. The compression spring 65 allows mechanical backlash to be eliminated and the whole arrangement makes it possible to obtain an extremely simply construction, with low cost and high precision.

It is understood that the drawing only shows an example provided by way of practical embodiment of the invention, which can vary in forms and arrangements without however departing from the scope of the invention as defined by the appended claims. Any reference numerals in the appended claims have the purpose of facilitating reading of the claims with reference to the description and to the drawing, and do not limit the scope of protection represented by the claims.

## Claims

1. An image acquisition unit at least one comprising: a housing (3) with a shell forming laterally a double handgrip (3A, 3B) to be gripped and held with two hands; on the back side of said housing, two eyepieces (31); inside said housing (3), at least one image detection system comprising at least one objective lens (25; 27; 29) on the front part of said housing (3); at least one focusing device for said image detection system, that can be operated from the outside of said housing; **characterized in that**:
- said at least one objective lens is fixed with respect to the housing (3);
- said at least one image detection system comprises, moreover, a moving support (55), arranged inside said housing and moving with respect to said at least one objective lens, to allow focusing of the image focused by the at least one objective lens (25) on an image detection sensor (59) provided for detecting the images focused by said objective lens (25; 27; 29), said at least one image detection sensor (59) being mounted on said moving support (55);
- said at least one focusing device comprises a ring (41; 43) adjustable from the outside of the housing (3) and placed in a position such as to be adjusted with the thumb of a hand when the double handgrip (3A, 3B) is gripped and hold with both the two hands;
- and a mechanical connection member (67-75) between said ring (41; 43) and said moving support (55) transforms the rotational movement of the ring into a translational and focusing movement of said moving support (55) with respect to said at least one fixed objective lens (25; 27; 29).

2. The unit as claimed in claim 1, **characterized in that** said double handgrip comprises two depressed portions (3A, 3B) formed laterally on said shell of the housing (3).

3. The unit as claimed in claim 2, **characterized in that** at said two depressed portions (3A, 3B) are arranged buttons (13, 15, 17, 19, 21, 23) for controlling components inside said unit.

4. The unit as claimed in claim 2 or 3, **characterized in that** said depressed portions (3A, 3B) are arranged on an upper part of the housing (3) and said ring (41; 43) is arranged on the lower part of said hosing (3), opposite said upper part.

5. The unit as claimed in claim 2 or 3 or 4, **characterized in that** said depressed portions (3A; 3B) and said ring (41; 43) are arranged such that by gripping the unit (1) with both hands surrounding the housing (3) laterally with the palms of the hands and placing the fmgers from the index finger to the little finger in the depressed portions (3A, 3B), at least one of the thumbs is positioned on said ring (41; 43).

6. The unit as claimed in one or more of the preceding claims, **characterized in that** an elastic member (65) is associated with said moving support (55) to eliminate backlash.

7. The unit as claimed in claim 6, **characterized in that** said elastic member comprises a helical compression spring (65) surrounding a chamber (51A, 55) extending between the at least one objective lens (25; 27; 29) and the at least one detection sensor (59) of said at least one image detection system, said helical spring (65) pushing the moving support (55) in a position of maximum distance from the at least one objective lens (25; 27; 29) and towards the inside of the housing (3).

8. The unit as claimed in one or more of the preceding claims, **characterized in that** the at least one objective lens (25; 27; 29) of said at least one image detection system forms a closing window and **in that** a sealing member is associated with said ring (41; 43).

9. The unit as claimed in one or more of the preceding claims, **characterized in that** said ring (41; 43) is torsionally coupled to a transmission system comprising a threaded pin (75, 75A) and a threaded bushing (73) engaging with said threaded pin, said transmission system being constrained axially to said moving support (55), such that rotation of the ring (41; 43) causes a translational movement of the moving support (55).

10. The unit as claimed in one or more of the preceding claims, **characterized in that** said ring (41; 43) is torsionally constrained to a threaded pin (75, 75A), engaging in a threaded bushing (73) constrained to the housing (3) so that it is able to translate parallel to its axis but not to rotate about said axis, the bushing being constrained to the moving support (55) so that a rotation of the threaded pin controlled through said ring (41, 43) causes an axial movement of the bushing and of the moving support parallel to the optical axis of the image acquisition system.

11. The unit as claimed in claim 9 or 10, **characterized in that** it comprises a seal on said threaded pin (75, 75A).

12. The unit as claimed in one or more of the preceding claims, **characterized in that** it comprises an image detection system in the infrared range and at least one image detection system in the visible range, each of said detection systems being associated with a respective focusing device.

13. The unit as claimed in claim 12, **characterized in that**:
- each of said image detection systems comprises a respective fixed objective lens (25; 27; 29) and a respective moving support (55) on which a sensor (59) for detection of the images focused by said objective lens is mounted;
- each focusing device comprises a respective ring (41, 43) adjustable from the outside of the housing (3);
- said two rings (41, 43) are arranged in positions so that they can be adjusted with the thumbs of the two hands with which said unit is gripped without requiring to release the handgrip (3A, 3B) of the unit;
- and a respective mechanical connection member between each ring and the respective moving support transforms the rotational movement of the ring into a translational and focusing movement of the moving support with respect to the objective lens.

## Patentansprüche

1. Bildaufnahmeeinheit (1) mit: einem Gehäuse (3) mit einer Hülle, die einen seitlichen Doppelhandgriff (3A, 3B) bildet, der mit zwei Händen zu ergreifen und zu halten ist, zwei Okularen (31) an der Rückseite des Gehäuses, zumindest einem Bilderfassungssystem innerhalb des Gehäuses (3) mit zumindest einer Objektivlinse (25, 27, 29) am Vorderteil des Gehäuses (3) und zumindest einer Fokussiervorrichtung für das Bilderfassungssystem, das von Außerhalb des Gehäuses bedient werden kann, **dadurch gekennzeichnet, dass**
- die zumindest eine Objektivlinse mit Bezug auf das Gehäuse (3) fixiert ist,
- das zumindest eine Bilderfassungssystem ferner einen beweglichen Träger (55) aufweist, der innerhalb des Gehäuses angeordnet ist und sich mit Bezug auf die zumindest eine Objektivlinse bewegt, zum Erlauben des Fokussierens des fokussierten Bildes durch die zumindest eine Objektivlinse (25) auf einen Bilderfassungssensor (59), der zur Erfassung der Bilder vorgesehen ist, die durch die Objektivlinse (25, 27, 29) fokussiert werden, wobei der zumindest eine Bilderfassungssensor (59) auf dem beweglichen Träger (55) montiert ist,
- wobei die zumindest eine Fokussierungsvorrichtung einen Ring (41, 43), aufweist, der von außerhalb des Gehäuses (3) einstellbar ist und in einer solchen Position platziert ist, um mit dem Daumen einer Hand eingestellt zu werden, wenn der Doppelhandgriff (3A, 3B) erfasst und mit beiden Händen gehalten wird,
- und einem mechanischen Verbindungselement (67 - 75) zwischen dem Ring (41, 43) und dem beweglichen Träger (55), das die Drehbewegung des Rings in eine Translation und eine Fokussierbewegung des beweglichen Trägers (55) mit Bezug auf die zumindest eine fixierte Objektivlinse (25, 27, 29) umsetzt.

2. Einheit nach Anspruch 1, **dadurch gekennzeichnet, dass** der Doppelhandgriff zwei abgesenkte Teile (3A, 3B) aufweist, die seitlich auf der Hülle des Gehäuses (3) ausgebildet sind.

3. Einheit nach Anspruch 2, **dadurch gekennzeichnet, dass** die beiden abgesenkten Teile (3A, 3B) angeordnete Knöpfe (13, 15, 17, 19, 21, 25) zum Steuern von Komponenten innerhalb der Einheit sind.

4. Einheit nach Anspruch 2 oder 3, **dadurch gekennzeichnet, dass** die abgesenkten Teile (3A, 3B) an einem oberen Teil des Gehäuses (3) angeordnet sind und wobei der Ring (41, 43) auf dem unteren Teil des Gehäuses (3) gegenüber des oberen Teils angeordnet ist.

5. Einheit nach Anspruch 2, 3 oder 4, **dadurch gekennzeichnet, dass** die abgesenkten Teile (3A, 3B) und der Ring (41, 43) derart angeordnet sind, dass durch Ergreifen der Einheit (1) mit beiden Händen das Gehäuse (3) seitlich mit den Handflächen umgeben und die Finger vom Zeigefinger zum kleinen Finger in den abgesenkten Teilen (3A, 3B) platziert zumindest einer der Daumen auf dem Ring (41, 43) platziert ist.

6. Einheit nach einem oder mehreren der vorstehenden Ansprüche, **dadurch gekennzeichnet, dass** ein elastisches Element (65) dem beweglichen Träger (55) zugeordnet ist, um eine Rückwirkung zu eliminieren.

7. Einheit nach Anspruch 6, **dadurch gekennzeichnet, dass** das elastische Element eine Wendelkompressionsfeder (65) aufweist, die eine Kammer (51A, 55) umgibt, die zwischen der zumindest einen Objektivlinse (25, 27, 29) und dem zumindest einen Erfassungssensor (59) des Bilderfassungssystems angeordnet ist, wobei die Wendelfeder (65) den beweglichen Träger (55) in einer Position maximaler Distanz von der zumindest einen Objektivlinse (25, 27, 29) schiebt und in Richtung auf das Innere des Gehäuses (3).

8. Einheit nach einem oder mehreren der vorstehenden Ansprüche, **dadurch gekennzeichnet, dass** die mindestens eine Objektivlinse (25, 27, 29) des zumindest einen Bilderfassungssystems ein Verschlussfenster bildet und dass ein Dichtelement dem Ring (41, 43) zugeordnet ist.

9. Einheit nach einem oder mehreren der vorstehenden Ansprüche, **dadurch gekennzeichnet, dass** der Ring (41, 43) torsionsmäßig an ein Transmissionssystem gekoppelt ist, das einen Gewindestift (75, 75A) und eine Gewindehülse (73) aufweist, die mit dem Gewindestift in Eingriff steht, wobei das Transmissionssystem axial durch den beweglichen Träger (55) derart begrenzt ist, dass eine Drehung des Rings (41, 43) eine Translationsbewegung des beweglichen Trägers (55) verursacht.

10. Einheit nach einem oder mehreren der vorstehenden Ansprüche, **dadurch gekennzeichnet, dass** der Ring (41, 43) torsionsmäßig an einen Gewindestift (75, 75A) gekoppelt ist, der in eine Gewindehülse (73) eingreift, die durch das Gehäuse (3) beschränkt ist, sodass er in der Lage ist, parallel zu seiner Achse verschoben zu werden aber nicht um seine Achse gedreht zu werden, wobei die Hülse durch den beweglichen Träger (55) so beschränkt ist, dass eine Drehung des Gewindestiftes, die durch den Ring (41, 43) gesteuert wird, eine Axialbewegung der Hülse und des beweglichen Trägers parallel zur optischen Achse des Bildaufnahmesystems verursacht.

11. Einheit nach Anspruch 9 oder 10, **dadurch gekennzeichnet, dass** sie eine Dichtung auf dem Gewindestift (75, 75A) aufweist.

12. Einheit nach einem oder mehreren der vorstehenden Ansprüche, **dadurch gekennzeichnet, dass** sie ein Bilderfassungssystem im Infrarotbereich aufweist und zumindest ein Bilderfassungssystem im sichtbaren Bereich, wobei jedes der Erfassungssysteme einer jeweiligen Fokussiervorrichtung zugeordnet ist.

13. Einheit nach Anspruch 12, **dadurch gekennzeichnet, dass**:
- jedes der Bilderfassungssysteme eine jeweilige fixierte Objektivlinse (25, 27, 29) und einen jeweiligen beweglichen Träger (55) aufweist, auf dem ein Sensor (59) zur Erfassung der Bilder montiert ist, die durch die Objektivlinse fokussiert werden,
- jede Fokussiervorrichtung einen jeweiligen Ring (41, 43) aufweist, der von außerhalb des Gehäuses (3) einstellbar ist,
- wobei die beiden Ringe (41, 43) in Positionen angeordnet sind, sodass sie mit den Daumen der beiden Hände eingestellt werden können, mit denen die Einheit ergriffen wird, ohne eine Freigabe des Handgriffs (3A, 3B) zu erfordern,
- und ein jeweiliges mechanisches Verbindungselement zwischen jedem Ring und dem jeweiligen beweglichen Träger die Drehbewegung des Rings in eine Translations- und Fokussierbewegung des beweglichen Trägers mit Bezug auf die Objektivlinse umsetzt.

## Revendications

1. Unité d'acquisition d'images (1) comprenant :
un boîtier (3) avec une coque formant latéralement au moins une poignée double (3A, 3B) à prendre et à tenir avec les deux mains ; sur le côté arrière dudit boîtier, deux oculaires (31) ; à l'intérieur dudit boîtier (3), au moins un système de détection d'images comprenant au moins une lentille d'objectif (25 ; 27 ; 29) sur la partie avant dudit boîtier (3) ; au moins un dispositif de mise au point pour ledit système de détection d'images, qui peut être actionné depuis l'extérieur dudit boîtier ; **caractérisée en ce que** :
- ladite au moins une lentille d'objectif est fixe par rapport au boîtier (3) ;
- ledit au moins un système de détection d'images comprend, en outre, un support de déplacement (55), agencé à l'intérieur dudit boîtier et se déplaçant par rapport à ladite au moins une lentille d'objectif, pour permettre la mise au point de l'image focalisée par l'au moins une lentille d'objectif (25) sur un capteur de détection d'images (59) fourni pour détecter les images focalisées par ladite lentille d'objectif (25 ; 27 ; 29), ledit au moins un capteur de détection d'images (59) étant monté sur ledit support de déplacement (55) ;
- ledit au moins un dispositif de mise au point comprend une bague (41 ; 43) réglable depuis l'extérieur du boîtier (3) et placée à une position permettant de la régler avec le pouce d'une main lorsque la poignée double (3A, 3B) est prise et tenue avec les deux mains ;
- et un organe de liaison mécanique (67-75) entre ladite bague (41 ; 43) et ledit support de déplacement (55) transforme le déplacement rotationnel de la bague en un déplacement de translation et de mise au point dudit support de déplacement (55) par rapport à ladite au moins une lentille d'objectif fixe (25 ; 27 ; 29).

2. Unité selon la revendication 1, **caractérisée en ce que** ladite poignée double comprend deux portions évidées (3A, 3B) formées latéralement sur ladite coque du boîtier (3).

3. Unité selon la revendication 2, **caractérisée en ce que**, aux dites deux portions évidées (3A, 3B), il est agencé des boutons (13, 15, 17, 19, 21, 23) pour commander des composants à l'intérieur de ladite unité.

4. Unité selon la revendication 2 ou 3, **caractérisée en ce que** lesdites portions évidées (3A, 3B) sont agencées sur une partie supérieure du boîtier (3) et ladite bague (41 ; 43) est agencée sur la partie inférieure dudit boîtier (3) à l'opposé de ladite partie supérieure.

5. Unité selon la revendication 2, 3 ou 4, **caractérisée en ce que** lesdites portions évidées (3A ; 3B) et ladite bague (41 ; 43) sont agencées de sorte que, en prenant l'unité (1) avec les deux mains entourant le boîtier (3) latéralement avec les paumes des mains et en plaçant les doigts de l'index à l'auriculaire dans les portions évidées (3A, 3B), au moins l'un des pouces soit positionné sur ladite bague (41 ; 43).

6. Unité selon une ou plusieurs des revendications précédentes, **caractérisée en ce qu'**un organe élastique (65) est associé au dit support de déplacement (55) pour éliminer tout recul.

7. Unité selon la revendication 6, **caractérisée en ce que** ledit organe élastique comprend un ressort de compression hélicoïdal (65) entourant une chambre (51A, 55) s'étendant entre l'au moins une lentille d'objectif (25 ; 27 ; 29) et l'au moins un capteur de détection (59) dudit système de détection d'images, ledit ressort hélicoïdal (65) poussant le support de déplacement (55) à une position de distance maximale à partir de l'au moins une lentille d'objectif (25 ; 27 ; 29) et vers l'intérieur du boîtier (3).

8. Unité selon une ou plusieurs des revendications précédentes, **caractérisée en ce que** l'au moins une lentille d'objectif (25 ; 27 ; 29) dudit au moins un système de détection d'images forme une fenêtre de fermeture et **en ce qu'**un organe d'étanchéité est associé à ladite bague (41 ; 43).

9. Unité selon une ou plusieurs des revendications précédentes, **caractérisée en ce que** ladite bague (41 ; 43) est couplée de manière à pouvoir subir une torsion à un système de transmission comprenant une broche filetée (75, 75A) et une douille filetée (73) se mettant en prise avec ladite broche filetée, ledit système de transmission étant contraint axialement vers ledit support de déplacement (55), de sorte que la rotation de la bague (41 ; 43) provoque un déplacement en translation du support de déplacement (55).

10. Unité selon une ou plusieurs des revendications précédentes, **caractérisée en ce que** ladite bague (41 ; 43) est contrainte de manière à pouvoir subir une torsion vers une broche filetée (75, 75A) se mettant en prise dans une douille filetée (73) contrainte vers le boîtier (3) de manière à pouvoir subir une translation parallèle à son axe sans tourner autour dudit axe, la douille étant contrainte vers le support de déplacement (55) de sorte qu'une rotation de la broche filetée régulée par l'intermédiaire de ladite bague (41, 43) provoque un déplacement axial de la douille et du support de déplacement parallèle à l'axe optique du système d'acquisition d'images.

11. Unité selon la revendication 9 ou 10, **caractérisée en ce qu'**elle comprend un joint sur ladite broche filetée (75, 75A).

12. Unité selon une ou plusieurs des revendications précédentes, **caractérisée en ce qu'**elle comprend un système de détection d'images dans la plage infrarouge et au moins un système de détection d'images dans la plage visible, chacun desdits systèmes de détection étant associé à un dispositif de mise au point respectif.

13. Unité selon la revendication 12, **caractérisée en ce que** :
- chacun desdits systèmes de détection d'images comprend une lentille d'objectif fixe respective (25 ; 27 ; 29) et un support de déplacement respectif (55) sur lequel un capteur (59) pour la détection des images focalisées par ladite lentille d'objectif est monté ;
- chaque dispositif de mise au point comprend une bague respective (41, 43) réglable depuis l'extérieur du boîtier (3) ;
- lesdites deux bagues (41, 43) sont agencées à des positions de sorte qu'elles puissent être réglées avec les pouces des deux mains tenant ladite unité sans avoir à lâcher la poignée (3A, 3B) de l'unité ;
- et un organe de liaison mécanique respectif entre chaque bague et le support de déplacement respectif transforme le déplacement rotationnel de la bague en un déplacement de translation et de mise au point du support de déplacement par rapport à la lentille d'objectif.
